# FASCICULE DE BREVET EUROPEEN

(11) **EP 3 331 941 B1**
(45) Date de publication et mention de la délivrance du brevet: **24.02.2021**
(21) Numéro de dépôt: 16744771.3
(22) Date de dépôt: 28.07.2016
(51) Int. Cl.: C08J 7/04, B60C 1/00

(54) **STRATIFIÉ MULTICOUCHE UTILISABLE COMME COUCHE ÉTANCHE DE PNEUMATIQUE**
MEHRSCHICHTIGES LAMINAT ZUR VERWENDUNG ALS SPERRSCHICHT EINES REIFENS
MULTILAYER LAMINATE WHICH CAN BE USED AS A BARRIER LAYER OF A TYRE

(30) Priorité: 03.08.2015 FR 1557493
(43) Date de publication de la demande: 13.06.2018
(73) Titulaire: Compagnie Générale des Etablissements Michelin, 63000 Clermont-Ferrand (FR)
(72) Inventeur: GORNARD, Benjamin, 63040 Clermont-Ferrand Cedex 09 (FR); ODDON, Mathieu, 63040 Clermont-Ferrand Cedex 09 (FR)
(74) Mandataire: Sidhu, Alban
(86) Numéro de dépôt international: PCT/EP2016/068049
(87) Numéro de publication internationale: WO 2017/021279

(56) Documents cités:
- EP-A1- 2 650 114
- FR-A1- 2 954 336
- FR-A1- 3 002 879

## Description

La présente invention est relative aux objets « pneumatiques », c'est-à-dire, par définition, aux objets qui prennent leur forme utilisable quand on les gonfle d'air ou d'un gaz de gonflage équivalent.

Plus particulièrement, la présente invention se rapporte à un stratifié multicouche comprenant au moins deux couches superposées particulières, utilisable notamment comme couche étanche de pneumatique.

L'invention concerne également un objet pneumatique, et en particulier un bandage pneumatique, comprenant le stratifié multicouche.

L'invention concerne aussi l'utilisation du stratifié multicouche comme couche étanche aux gaz de gonflage, de préférence comme couche étanche de pneumatique.

Enfin, l'invention concerne un procédé de préparation du stratifié multicouche.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou gomme « intérieure » (« inner liner ») étanche est aujourd'hui remplie par des compositions à base de caoutchouc butyle (copolymère d'isobutylène et d'isoprène), reconnues depuis fort longtemps pour leurs excellentes propriétés d'étanchéité.

Toutefois, un inconvénient bien connu des compositions à base de caoutchouc butyle est qu'elles présentent des pertes hystérétiques importantes, qui plus est sur un spectre large de températures, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Les élastomères thermoplastiques du type SIBS (styrène-isobutylène-styrène) ont été utilisés afin d'améliorer les propriétés d'hystérèse des couches internes d'étanchéité les contenant. On peut notamment citer les demandes de brevet FR 08/57844 et FR 08/57845.

Cependant, l'utilisation de formulations à base de SIBS en tant que couche interne d'étanchéité présente des inconvénients.

En particulier, les objets pneumatiques obtenus à partir de ces élastomères thermoplastiques présentent une adhésion à la couche adjacente, typiquement une nappe carcasse diénique, qui peut s'avérer insuffisante, en particulier à chaud. Ainsi, on peut observer un fluage de matière lors de roulages à grande vitesse, et également des arrachements de matière lors de la sortie de l'objet pneumatique de la presse de cuisson à chaud. Il est également possible d'observer des décollements lors de roulages à vitesse élevée.

Par conséquent, il existe un besoin de développer des nouvelles compositions élastomériques, utilisables notamment comme couche étanche de pneumatique présentant un bon niveau d'adhésion à la nappe carcasse, y compris à haute température, c'est-à-dire que l'interface formée entre la couche étanche et la nappe carcasse doit en particulier présenter une bonne tenue thermique EP 2 650 114 propose la mise en œuvre d'un stratifié avec deux couches à base de styrène et d'isobutylène.

Les demanderesses ont maintenant découvert que l'utilisation d'un stratifié multicouche comportant au moins deux couches superposées avec, à titre de première couche, une première composition comprenant un copolymère d'isobutylène et de styrène substitué ou non substitué, et à titre de seconde couche, une seconde composition comprenant i) un élastomère thermoplastique comprenant au moins un premier bloc compatible avec le ou les copolymères d'isobutylène et de styrène substitué ou non substitué et au moins un deuxième bloc compatible avec un polymère diénique, et ii) un polymère polyaryléther, permettait de résoudre les inconvénients évoqués ci-dessus.

L'invention a donc pour objet un stratifié multicouche pour pneumatique comportant au moins deux couches superposées :
- à titre de première couche, une première composition comprenant au moins 50 pce d'un ou plusieurs copolymères d'isobutylène et de styrène substitué ou non substitué,
- à titre de seconde couche, une seconde composition comprenant i) au moins 50 pce d'un ou plusieurs élastomères thermoplastiques comprenant au moins un premier bloc compatible avec le ou les copolymères d'isobutylène et de styrène substitué ou non substitué et au moins un deuxième bloc compatible avec un polymère diénique, et ii) un ou plusieurs polymères polyaryléther.

Le stratifié multicouche selon l'invention peut être avantageusement utilisé comme couche étanche de pneumatique.

Ce stratifié multicouche, en plus de présenter de bonnes propriétés d'étanchéité attendues pour une couche étanche, présente également une bonne adhésion à la nappe carcasse.

En effet, l'interface formée entre le stratifié multicouche et la nappe carcasse présente une température de ramollissement élevée, permettant une adhésion améliorée, y compris lorsque l'objet pneumatique est utilisé dans des conditions de températures élevées, par exemple lors d'un roulage à grande vitesse pour un pneumatique.

En particulier, cela évite les problèmes de fluage et de décollement de la couche étanche pendant une utilisation à haute température.

Par conséquent, l'invention a également pour objet, un objet pneumatique, en particulier un bandage pneumatique comportant le stratifié multicouche ci-dessus.

L'invention a aussi pour objet l'utilisation du stratifié multicouche ci-dessus comme couche étanche aux gaz de gonflage, de préférence comme couche étanche de pneumatique.

Enfin, l'invention concerne un procédé de préparation du stratifié multicouche.

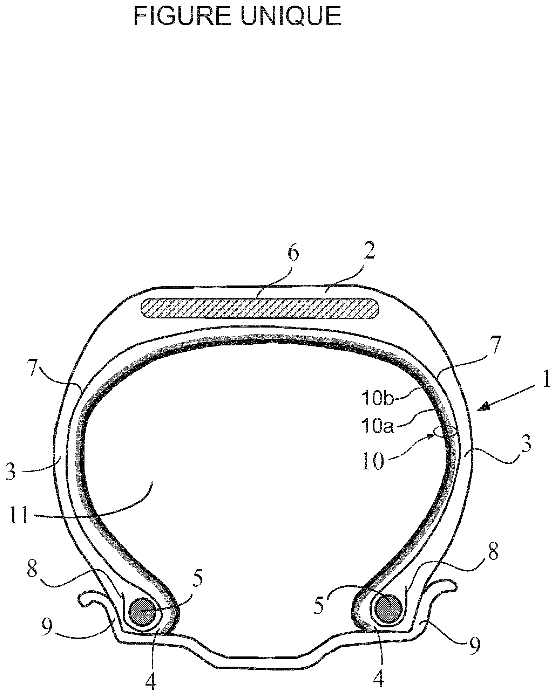

L'invention ainsi que ses avantages seront aisément compris à la lumière de la description, des exemples de réalisations qui suivent et de la figure unique qui schématise, en coupe radiale, un bandage pneumatique incorporant un stratifié multicouche conforme à l'invention.

Dans la présente description, sauf indication expresse différente, tous les pourcentages (%) indiqués sont des % en poids.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères de la composition considérée (première ou seconde), c'est-à-dire du poids total du ou des élastomères, qu'ils soient thermoplastiques ou non thermoplastiques, présents dans la composition considérée. Ainsi, un constituant à 60 pce signifiera par exemple 60 g de ce constituant pour 100 g d'élastomère de la composition considérée.

Ainsi un premier objet de l'invention est un stratifié multicouche pour pneumatique comportant au moins deux couches superposées :
- à titre de première couche, une première composition comprenant au moins 50 pce d'un ou plusieurs copolymères d'isobutylène et de styrène substitué ou non substitué,
- à titre de seconde couche, une seconde composition comprenant i) au moins 50 pce d'un ou plusieurs élastomères thermoplastiques comprenant au moins un premier bloc compatible avec le ou les copolymères d'isobutylène et de styrène substitué ou non substitué et au moins un deuxième bloc compatible avec un polymère diénique, et ii) un ou plusieurs polymères polyaryléther.

Par élastomère thermoplastique (TPE), on entend, de manière connue, un polymère de structure intermédiaire entre un polymère thermoplastique et un élastomère.

Un élastomère thermoplastique est constitué d'une ou plusieurs séquences rigides « thermoplastiques » reliées à une ou plusieurs séquences souples « élastomères ». Les segments rigides et souples peuvent être disposés linéairement, en étoile ou branchés.

Typiquement, chacun de ces segments ou blocs contient au minimum plus de 5, généralement plus de 10 unités de base.

Comme expliqué précédemment, la première couche du stratifié multicouche selon l'invention est constituée d'une première composition comprenant au moins 50 pce d'un ou plusieurs copolymères d'isobutylène et de styrène substitué ou non substitué.

En d'autres termes, le taux en copolymères d'isobutylène et de styrène substitué ou non substitué de la première composition varie de plus de 50 pce à 100 pce.

Par copolymère d'isobutylène et de styrène substitué ou non substitué, on entend un polymère constitué d'au moins un mélange de motifs issus d'un monomère isobutylène et de motifs issus d'un monomère styrène substitué ou non substitué.

Par monomère styrène substitué ou non substitué au sens de la présente invention, on entend tout monomère à base de styrène, non substitué comme substitué. Parmi les styrènes substitués peuvent être cités par exemple les méthylstyrènes, par exemple α-méthylstyrène, *β-*méthylstyrène, *p*-méthylstyrène, *tert*-butylstyrène, et les chlorostyrènes, par exemple monochlorostyrène, dichlorostyrène.

Ce ou ces copolymères d'isobutylène et de styrène substitué ou non substitué sont des élastomères thermoplastiques au sens de la présente invention.

Ce ou ces copolymères d'isobutylène et de styrène substitué ou non substitué offrent généralement au stratifié multicouche d'excellentes propriétés d'étanchéité.

De manière préférée dans la présente invention, le ou les copolymères d'isobutylène et de styrène substitué ou non substitué de la première composition sont choisis parmi les copolymères à blocs d'isobutylène et de styrène substitué ou non substitué.

Par copolymère à blocs d'isobutylène et de styrène substitué ou non substitué doit être entendu dans la présente invention, tout copolymère thermoplastique styrénique comportant au moins un bloc polystyrène, les monomères styrène étant substitués ou non substitués, et au moins un bloc polyisobutylène, auxquels peuvent être associés ou non d'autres blocs saturés ou non et/ou d'autres unités monomères.

De manière particulièrement préférée dans la présente invention, le ou les copolymères d'isobutylène et de styrène substitué ou non substitué sont choisis parmi un copolymère diblocs styrène/isobutylène (SIB), un copolymère triblocs styrène/isobutylène/styrène (SIBS), et un mélange de ces polymères.

Des copolymères à blocs d'isobutylène et de styrène substitué ou non substitué tels que le SIB ou le SIBS sont connus et disponibles commercialement, vendus par exemple par la société KANEKA sous la dénomination « SIBSTAR », par exemple « Sibstar 103T », « Sibstar 102T », « Sibstar 073T » ou « Sibstar 072T » pour les SIBS et « Sibstar 042D » pour les SIB. Ils ont par exemple été décrits, ainsi que leur synthèse, dans les documents brevet EP 731 112, US 4 946 899, US 5 260 383.

Avantageusement dans la présente invention, le ou les copolymères d'isobutylène et de styrène substitué ou non substitué ont une teneur en motifs issus d'un monomère styrène substitué ou non substitué variant de 5 à 50 % en poids, de préférence variant de 10 à 40 % en poids, plus préférentiellement variant de 15 à 35 % en poids.

Dans la présente demande, lorsqu'il est fait référence à la température de transition vitreuse d'un élastomère thermoplastique (copolymère à blocs), il s'agit de la température de transition vitreuse relative au bloc élastomère. En effet, de manière connue, les élastomères thermoplastiques présentent deux pics de température de transition vitreuse (Tg, mesurée selon ASTM D3418), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques se définissent par une Tg inférieure à la température ambiante (25°C), tandis que les blocs rigides ont une Tg supérieure à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Avantageusement, le ou les copolymères d'isobutylène et de styrène substitué ou non substitué ont une température de transition vitreuse inférieure à -20°C, de préférence inférieure à -40°C. Une valeur de Tg supérieure à ces minima peut diminuer les performances du stratifié multicouche lors d'une utilisation à très basse température. Pour une telle utilisation, la Tg du ou des copolymères d'isobutylène et de styrène substitué ou non substitué est de préférence inférieure à - 50°C.

La masse moléculaire moyenne en nombre (notée Mn) du ou des copolymères d'isobutylène et de styrène substitué ou non substitué est préférentiellement comprise entre 30 000 et 500 000 g/mol, plus préférentiellement comprise entre 40 000 et 400 000 g/mol. En dessous des minima indiqués, la cohésion entre les chaînes d'élastomères, notamment en raison de leur dilution éventuelle par une huile d'extension ou autre plastifiant liquide, risque d'être affectée. Par ailleurs, une masse Mn trop élevée peut être pénalisante pour la souplesse des deux couches. Ainsi, on a constaté qu'une valeur comprise dans un domaine de 50 000 à 300 000 g/mol était particulièrement bien adaptée, notamment à une utilisation du stratifié multicouche dans un bandage pneumatique.

La masse moléculaire moyenne en nombre (Mn) des élastomères thermoplastiques de la présente demande est déterminée de manière connue, par chromatographie d'exclusion stérique (SEC). L'échantillon est préalablement solubilisé dans du tétrahydrofuranne à une concentration d'environ 1 g/L ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 mL/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn avec Mw masse moléculaire moyenne en poids) du ou des copolymères d'isobutylène et de styrène substitué ou non substitué est de préférence inférieur à 3 ; plus préférentiellement l'indice de polydispersité est inférieur à 2.

La première composition du stratifié multicouche selon l'invention peut éventuellement comporter d'autres élastomères différents du ou des copolymères d'isobutylène et de styrène substitué ou non substitué de la première composition, dans une quantité minoritaire (inférieure à 50 pce).

De tels élastomères complémentaires peuvent être par exemple des élastomères diéniques tels que du caoutchouc naturel ou un polyisoprène synthétique, un caoutchouc butyle voire des élastomères thermoplastiques styréniques saturés, dans la limite de la compatibilité de leurs microstructures avec le ou les copolymères d'isobutylène et de styrène substitué ou non substitué.

De manière préférée, le taux en copolymères d'isobutylène et de styrène substitué ou non substitué de la première composition varie de 70 à 100 pce, et plus préférentiellement varie de 80 à 100 pce.

De manière particulièrement préférée, le ou les copolymères d'isobutylène et de styrène substitué ou non substitué sont les seuls élastomères de la première composition du stratifié multicouche. En conséquence, dans un tel cas le taux en copolymères d'isobutylène et de styrène substitué ou non substitué de la première composition est égal à 100 pce.

Le ou les copolymères d'isobutylène et de styrène substitué ou non substitué sont suffisants à eux seuls pour que soit remplie, dans la première couche du stratifié multicouche, la fonction d'étanchéité aux gaz vis-à-vis des objets pneumatiques dans lesquels ils sont utilisés.

Cependant, la première composition du stratifié multicouche selon l'invention peut également et préférentiellement comprendre une huile d'extension.

L'huile d'extension a généralement pour fonction de faciliter la mise en œuvre, particulièrement l'intégration dans un objet pneumatique du stratifié multicouche par un abaissement du module et une augmentation du pouvoir tackifiant. On peut aussi parler d'agent plastifiant.

Cette huile n'est pas un élastomère au sens de la présente invention.

A titre d'huile d'extension, on peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension est choisie parmi les huiles oléfiniques, de préférence est choisie parmi les huiles polybutylène et plus préférentiellement est choisie parmi les huiles polyisobutylène (en abrégé « PIB »). En effet, cette huile a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (par exemple « Dynapak Poly 190 »), par INEOS Oligomer sous la dénomination INDOPOL H1200, par BASF sous les dénominations « Glissopal » (par exemple « Glissopal 1000 ») ou « Oppanol » (par exemple « Oppanol B12 »). Des huiles paraffiniques sont commercialisées par exemple par EXXON sous la dénomination « Telura 618 » ou par Repsol sous la dénomination « Extensol 51 ».

L'huile d'extension a de préférence une masse molaire moyenne en nombre allant de 350 à 4 000 g/mol, plus préférentiellement allant de 400 à 3 000 g/mol.

En effet, il a été montré que pour des masses moléculaires moyennes en nombre trop basses, il existe un risque de migration de l'huile à l'extérieur de la composition, tandis que des masses trop élevées peuvent entraîner une rigidification excessive de cette composition. Ce choix s'est avéré constituer un excellent compromis pour les applications visées, en particulier pour une utilisation dans un bandage pneumatique.

La masse moléculaire moyenne en nombre (Mn) de l'huile d'extension, quand elle est présente, peut être déterminée par chromatographie d'exclusion stérique (SEC) ; l'échantillon d'huile est préalablement solubilisé dans du tétrahydrofuranne à une concentration d'environ 1 g/L ; puis la solution est filtrée sur filtre de porosité 0,45 µm avant injection. L'appareillage utilisé est une chaine chromatographique « WATERS alliance ». Le solvant d'élution est le tétrahydrofuranne, le débit de 1 mL/min, la température du système de 35°C et la durée d'analyse de 30 min. On utilise un jeu de deux colonnes WATERS de dénominations commerciales « STYRAGEL HT6E ». Le volume injecté de la solution de l'échantillon d'huile est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

De manière préférée, l'huile d'extension est présente dans la première composition à une teneur supérieure à 15 pce, de préférence comprise entre 15 et 90 pce, plus préférentiellement encore supérieure à 20 pce, et en particulier comprise entre 20 et 80 pce.

En dessous du minimum indiqué, la première composition du stratifié multicouche selon l'invention risque de présenter une rigidité trop forte pour certaines applications tandis qu'au-delà du maximum préconisé, on s'expose à un risque de cohésion insuffisante de la première composition et de perte d'étanchéité pouvant être néfaste selon l'application considérée.

Dans un mode tout particulièrement préféré de l'invention, la première composition du stratifié multicouche selon l'invention comprend une ou plusieurs charges choisies parmi les charges lamellaires.

Ces charges dites lamellaires (en anglais « platy fillers ») sont bien connues de l'homme du métier. Elles ont été utilisées notamment dans des bandages pneumatiques pour réduire la perméabilité des couches étanches aux gaz conventionnelles à base de caoutchouc butyle.

Elles se présentent généralement sous forme de plaques, de plaquettes, de feuilles ou de feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 µm voire 800 µm).

Préférentiellement, les charges lamellaires utilisées conformément à l'invention sont choisies dans le groupe constitué par les graphites, les phyllosilicates et les mélanges de telles charges. Parmi les graphites peuvent être cités notamment les graphites naturels, les graphites expansés ou les graphites synthétiques. Parmi les phyllosilicates, on citera notamment les argiles, les talcs, les micas, les kaolins.

Les phyllosilicates peuvent être modifiés ou non par exemple par un traitement de surface. A titre d'exemples de tels phyllosilicates modifiés, on peut citer notamment des micas recouverts d'oxyde de titane et des argiles modifiées par des tensioactifs (« organo clays »).

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R. Grâce), les micas modifiés ou traités (par exemple, la gamme Iriodin® commercialisée par Merck).

Comme exemples de graphites, on peut citer les graphites commercialisés par la société Timcal (gamme Timrex®).

Comme exemple de talcs, on peut citer les talcs commercialisés par la société Luzenac.

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces charges pouvant être modifiées ou non.

De manière particulièrement préférée, la ou les charges lamellaires de la première composition du stratifié multicouche selon l'invention sont choisies parmi les graphites, les talcs, les micas, et les mélanges de telles charges.

Dans ce mode tout particulièrement préféré de l'invention, le taux en charge lamellaire de la première composition varie généralement de 5 à 15 pce, de préférence varie de 10 à 15 pce.

La première couche du stratifié multicouche selon l'invention a préférentiellement une épaisseur supérieure ou égale à 0,05 mm, de préférence allant de 0,1 à 10 mm, et plus préférentiellement allant de 0,1 à 2 mm.

On comprendra aisément que, selon les domaines d'application spécifiques, les dimensions et les pressions en jeu, le mode de mise en œuvre de l'invention peut varier, la première couche du stratifié multicouche comportant alors plusieurs gammes d'épaisseur préférentielles.

Ainsi par exemple, pour des bandages pneumatiques de type tourisme, la première couche peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comme expliqué précédemment, la seconde couche du stratifié multicouche selon l'invention est constituée d'une seconde composition comprenant i) au moins 50 pce d'un ou plusieurs élastomères thermoplastiques comprenant au moins un premier bloc compatible avec le ou les copolymères d'isobutylène et de styrène substitué ou non substitué et au moins un deuxième bloc compatible avec un polymère diénique, et ii) un ou plusieurs polymères polyaryléther.

En d'autres termes, le taux en élastomères thermoplastiques comprenant au moins un premier bloc compatible avec le ou les copolymères d'isobutylène et de styrène substitué ou non substitué et au moins un deuxième bloc compatible avec un polymère diénique de la seconde composition varie de plus de 50 pce à 100 pce.

Par « élastomère thermoplastique comprenant au moins un premier bloc compatible avec le ou les copolymères d'isobutylène et de styrène substitué ou non substitué et au moins un deuxième bloc compatible avec un polymère diénique » dans la présente demande, on entend que le mélange du premier bloc compatible avec le ou les copolymères d'isobutylène et de styrène substitué ou non substitué et du ou des copolymères d'isobutylène et de styrène substitué ou non substitué présente une seule température de transition vitreuse (Tg) et que le mélange du deuxième bloc compatible avec un polymère diénique et du polymère diénique présente aussi une seule température de transition vitreuse (Tg).

Cette « compatibilité » peut également se quantifier au moyen de l'équation de Fox. En effet, la conformité de la valeur de Tg d'un coupage avec l'équation de Fox permet d'affirmer que les polymères entrant dans la composition du coupage sont compatibles (T. G. Fox, « Influence of Diluent and of Copolymer Composition on the Glass Temperature of a Polymer System », Bull. Am. Phys. Soc., vol. 1, p. 123, 1956.)

De manière préférée, le ou les élastomères thermoplastiques de la seconde composition sont choisis parmi les élastomères thermoplastiques styréniques.

De manière particulièrement préférée, le ou les élastomères thermoplastiques de la seconde composition sont choisis dans le groupe constitué par les copolymères à blocs non hydrogénés ou partiellement hydrogénés, comprenant au moins un bloc styrène, les monomères styrène étant substitués ou non substitués, et au moins un bloc diénique.

Le ou les blocs diéniques sont de préférence choisis dans le groupe constitué par les polyisoprènes, les polybutadiènes, les copolymères statistiques butadiène-styrène éventuellement hydrogénés et les mélanges de ces polymères.

Ainsi, le ou les élastomères thermoplastiques de la seconde composition sont de préférence choisis dans le groupe constitué par les copolymères à blocs styrène/butadiène (SB), styrène/isoprène (SI), styrène/butadiène/butylène (SBB), styrène/butadiène/isoprène (SBI), styrène/butadiène/styrène (SBS), styrène/butadiène/butylène/styrène (SBBS), styrène/isoprène/styrène (SIS), styrène/butadiène/isoprène/styrène (SBIS), styrène/copolymère statistique butadiène-styrène/styrène (SOE), et les mélanges de ces copolymères, ces copolymères étant non hydrogénés ou partiellement hydrogénés.

De manière très préférentielle, le ou les élastomères thermoplastiques de la seconde composition sont choisis dans le groupe constitué par les copolymères à blocs styrène/isoprène/styrène (SIS), les copolymères à blocs styrène/copolymère statistique (butadiène-styrène) (aussi appelé bloc SBR)/styrène partiellement hydrogénés (SOE), et les mélanges de ces copolymères.

De manière bien connue, le bloc SBR des copolymères de type SOE, copolymères à blocs styrène et à blocs copolymère statistique butadiène-styrène (bloc SBR), comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée.

De manière préférentielle, on utilise notamment un bloc SBR ayant une teneur en styrène comprise, par exemple dans un domaine allant de 10 à 60 % en poids, par rapport au poids total du bloc SBR, de préférence de 20 à 50 % en poids, par rapport au poids total du bloc SBR, et pour la partie butadiénique, une teneur en liaisons -1,2 comprise dans un domaine allant de 4 à 75 % (% molaire), par rapport au nombre total de moles de motifs butadiène et une teneur en liaisons -1,4 comprise dans un domaine allant de 25 et 96 % (% molaire) par rapport au nombre total de moles de motifs butadiène.

La détermination du taux d'hydrogénation est réalisée par une analyse RMN. Les spectres sont acquis sur un spectromètre Avance 500 MHz BRUKER équipé d'une Cryosonde 1H-X 5 mm. L'expérience RMN 1H quantitative, utilise une séquence simple impulsion 30° et un délai de répétition de 5 secondes entre chaque acquisition. 64 accumulations sont réalisées. Les échantillons (environ 25 mg) sont solubilisés dans le CS2 environ 1 mL, 100 µL de cyclohexane deutéré sont ajouté pour faire le lock pendant l'acquisition. Les déplacements chimiques sont calibrés par rapport à l'impureté protonée du CS2 δppm 1H à 7,18 ppm référencé sur le TMS (δppm 1H à 0ppm). Le spectre RMN 1H permet de quantifier la microstructure par intégration des massifs de signaux caractéristiques des différents motifs :
- Le styrène provenant du SBR et des blocs polystyrène. Il est quantifiable dans la zone des aromatiques entre 6,0 ppm et 7,3 ppm pour 5 protons (en retirant l'intégrale du signal de l'impureté du CS2 à 7,18 ppm).
- Le PB1-2 (motif butadiène 1-2 non hydrogéné) provenant du SBR. Il est quantifiable dans la zone des éthyléniques entre 4,6 ppm et 5,1 ppm pour 2 protons.
- Le PB1-4 (motif butadiène 1-4 non hydrogéné) provenant du SBR. Il est quantifiable dans la zone des éthyléniques entre 5,1 ppm et 6,1 ppm pour 2 protons et en supprimant 1 proton du motif PB 1-2.
- Le PB1-2 hydrogéné (motif butadiène 1-2 hydrogéné) provenant de l'hydrogénation et ne présentant que des protons aliphatiques. Les CH₃ pendant du PB1-2 hydrogéné ont été identifiés et sont quantifiables dans la zone des aliphatiques entre 0,4 et 0,8 ppm pour 3 protons.
- Le PB1-4 hydrogéné (motif butadiène 1-4 hydrogéné) provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif =Intégrale 1H d'un motif/ ∑(intégrales 1H de chaque motif). Par exemple pour un motif de styrène : %molaire du styrène = (Intégrale 1H du styrène) / (Intégrale 1H du styrène+ Intégrale 1H du PB1-2 + Intégrale 1H du PB1-4 + Intégrale 1H du PB1-2 hydrogéné + Intégrale 1H du PB1-4 hydrogéné).

Selon le taux d'hydrogénation du bloc SBR, la teneur en double liaison de la partie butadiénique du bloc SBR peut diminuer jusqu'à une teneur de 0 % molaire pour un bloc SBR totalement hydrogéné. De préférence, dans les TPE à blocs SBR et PS utiles aux besoins de l'invention, le bloc élastomère SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100% molaire des doubles liaisons dans la portion butadiène sont hydrogénées.

A titre d'élastomères thermoplastiques de la seconde composition, on peut notamment citer les SIS de la société Kraton sous la dénomination « Kraton D » (comme par exemple les produits D1161, D1118, D1116, D1163), ceux de la société Dynasol sous la dénomination « Calprene » (comme par exemple les produits C405, C411, C412) ou encore ceux de la société Asahi sous la dénomination « Tuftec » (comme par exemple le produit P1500). On peut également citer les SOE de la société Asahi Kasei sous la dénomination « SOE S1611 », « SOE L605 » ou encore « SOE L606 ».

Avantageusement, le ou les élastomères thermoplastiques de la seconde composition ont une teneur en motifs issus d'un monomère styrène substitué ou non substitué variant de 5 à 50 % en poids, de préférence variant de 10 à 40 % en poids, plus préférentiellement variant de 15 à 35 % en poids.

Avantageusement, le ou les élastomères thermoplastiques de la seconde composition ont une température de transition vitreuse (Tg, mesurée selon la norme ASTM D3418) inférieure à 25°C, de préférence inférieure à 15°C. Une valeur de Tg supérieure à ces minima peut diminuer les performances du stratifié multicouche.

La masse moléculaire moyenne en nombre (notée Mn) du ou des élastomères thermoplastiques de la seconde composition est préférentiellement comprise entre 30 000 et 500 000 g/mol, plus préférentiellement comprise entre 40 000 et 400 000 g/mol. En dessous des minima indiqués, la cohésion entre les chaînes d'élastomères, notamment en raison de leur dilution éventuelle par une huile d'extension ou autre plastifiant liquide, risque d'être affectée. Par ailleurs, une masse Mn trop élevée peut être pénalisante pour la souplesse des deux couches. Ainsi, on a constaté qu'une valeur comprise dans un domaine de 50 000 à 300 000 g/mol était particulièrement bien adaptée, notamment à une utilisation du stratifié multicouche dans un bandage pneumatique.

L'indice de polydispersité (Ip) du ou des élastomères thermoplastiques de la seconde composition est de préférence inférieur à 3 ; plus préférentiellement l'indice de polydispersité est inférieur à 2.

De manière préférée, le taux en élastomères thermoplastiques de la seconde composition varie de 60 à 100 pce, de préférence varie de 70 à 100 pce.

De manière particulièrement préférée, le ou les élastomères thermoplastiques de la seconde composition sont les seuls élastomères de la seconde composition du stratifié multicouche. En conséquence, dans un tel cas le taux en élastomères thermoplastiques de la seconde composition est égal à 100 pce.

Néanmoins, la seconde composition du stratifié multicouche selon l'invention peut éventuellement comporter d'autres élastomères différents du ou des élastomères thermoplastiques de la seconde composition évoqués ci-dessus, dans une quantité minoritaire (inférieure à 50 pce).

De tels élastomères complémentaires peuvent être par exemple des élastomères diéniques tels que du caoutchouc naturel ou un polyisoprène synthétique, un caoutchouc butyle voire des élastomères thermoplastiques styréniques saturés, dans la limite de la compatibilité de leurs microstructures avec le ou les élastomères thermoplastiques de la seconde composition évoqués précédemment.

Comme décrit précédemment, la seconde composition du stratifié multicouche selon l'invention comprend un ou plusieurs polymères polyaryléther.

Ce ou ces polymères polyaryléther ne sont pas des élastomères au sens de la présente invention.

Par « aryle » au sens de la présente invention, on entend un hydrocarbure aromatique, substitué ou non, comprenant de 6 à 12 atomes de carbone.

De manière préférée, le ou les polymères polyaryléther sont choisis parmi les polymères de polyphénylène éther (PPE). Ce type de composé est décrit par exemple dans l'encyclopédie « Ullmann's encyclopedia of industrial chemistry » éditée par VCH, vol A 21, pages 605-614, 5e édition, 1992.

De préférence, le ou les polymères polyaryléther utiles aux besoins de l'invention présentent préférentiellement une température de transition vitreuse (Tg), mesurée par DSC selon la norme ASTM D3418 de 1999 comprise dans un domaine allant de 0 à 280°C, de préférence de 5 à 250°C et plus préférentiellement de 5 à 220°C. En dessous de 0°C, le polymère polyaryléther ne permet pas un décalage de Tg suffisant dans la composition la comprenant et au-dessus de 280°C, on peut rencontrer des problèmes de fabrication notamment pour obtenir un mélange homogène.

De manière connue, le ou les polymères polyaryléther utiles aux besoins de l'invention, ont de préférence des masses moléculaires moyennes en nombre (Mn) variables notamment d'environ 1000 à 45000 g/mol, le plus souvent de 15000 à 45000 g/mol, la Mn étant mesurée de manière connue de l'homme de l'art par SEC (encore nommée GPC, comme dans la référence US4588806, colonne 8). Pour les besoins de l'invention on préfère pour la composition de l'invention un ou des polymères polyaryléther possédant une masse Mn comprise dans un domaine variant de 10000 à 45000 g/mol, préférentiellement de 15000 à 40000 g/mol, et plus préférentiellement de 25000 à 40000 g/mol.

Préférentiellement, la valeur de l'indice de polydispersité Ip (rappel : Ip = Mw/Mn avec Mw masse moléculaire moyenne en poids et Mn masse moléculaire moyenne en nombre) du ou des polymères polyaryléther est inférieure ou égale à 5, plus préférentiellement inférieure ou égale à 3 et plus préférentiellement encore inférieure ou égale à 2.

Généralement, le taux en polymères polyaryléther de la seconde composition varie de 1 à 20 pce, de préférence varie de 5 à 15 pce.

La seconde couche du stratifié multicouche a préférentiellement une épaisseur supérieure à 0,01 mm, mais peut varier dans une large mesure, par exemple entre 0,01 et 0,5 mm, en fonction notamment du mode de dépôt de ladite seconde couche sur la première couche du stratifié multicouche.

Selon un mode préféré, pour des raisons économiques et de simplicité de fabrication, les compositions du stratifié multicouche de l'invention ne comprennent pas d'autres composants que ceux listés précédemment.

Alternativement et préférentiellement également, pour des propriétés améliorées, le stratifié multicouche selon l'invention peut comporter par ailleurs les divers additifs usuellement présents dans les couches élastomères étanches aux gaz de gonflage connues de l'homme du métier. Ces additifs se trouvant dans la première couche et/ou dans la seconde couche mais de préférence dans la première couche.

A titre d'additifs pouvant être présents dans le stratifié multicouche selon l'invention, on citera par exemple les charges renforçantes bien connues de l'homme de l'art et les agents de couplage associés, notamment lorsque de la silice est utilisée, les agents colorants avantageusement utilisables pour la coloration du stratifié multicouche, les plastifiants autres que les huiles d'extension précitées, les agents de protection tels que les antioxydants ou les antiozonants, anti-UV, divers agents de mise en œuvre ou autres stabilisants, ou encore les promoteurs aptes à favoriser l'adhésion au reste de la structure de l'objet pneumatique.

Le stratifié multicouche selon l'invention peut être préparé par des procédés de synthèse connus et décrits dans la littérature, notamment celle citée dans la présentation de l'état de la technique de la présente description. L'homme du métier saura choisir les conditions de polymérisation adéquates et réguler les différents paramètres des procédés de polymérisation afin d'aboutir aux caractéristiques spécifiques de structure du stratifié multicouche selon l'invention.

Ainsi, une première stratégie de préparation du stratifié multicouche consiste à préparer séparément les deux couches constitutives de l'élastomère multicouche et à les assembler par tout moyen approprié, pour obtention finale du stratifié multicouche de l'invention, avant incorporation de ce dernier dans un bandage pneumatique.

Ainsi, la première étape de la première stratégie de préparation consiste à préparer séparément la première et la seconde couche par mélange des constituants de chacune des compositions de manière conventionnelle.

Les première et seconde compositions sont ensuite assemblées.

Une deuxième stratégie de préparation consiste à préparer simultanément les deux couches par coextrusion avec une filière spécifique adaptée. Le stratifié est préparé en une seule étape à partir des compositions mélangées. L'extrudeuse peut également être pourvue d'une filière permettant de coextruder la première et la deuxième couches aux dimensions souhaitées.

Une troisième stratégie de préparation consiste à préparer uniquement la première couche par extrusion, en mélangeant tout d'abord les constituants de la première composition de manière conventionnelle. Le mélange ainsi obtenu est ensuite extrudé dans une extrudeuse, par exemple une extrudeuse bi-vis. Cette extrudeuse peut comprendre une filière permettant d'extruder la première couche aux dimensions souhaitées.

La seconde couche, quant à elle, est préparée par dissolution et appliquée sur la première couche afin de former le stratifié multicouche selon l'invention.

Pour ce faire, les ingrédients de la seconde couche sont introduits dans un solvant, de préférence le toluène, puis agités sur une secoueuse, de préférence pendant au moins 24 heures jusqu'à solubilisation complète pour former une solution généralement à 10 % en poids de soluté. Ainsi, la somme des constituants représente 10 % en poids de la solution.

La dissolution ainsi formée est ensuite appliquée sur la première couche formée précédemment. On laisse ensuite sécher la dissolution à température ambiante généralement pendant 15 mn.

Le stratifié multicouche selon l'invention est ainsi formé.

Ainsi, un autre objet de la présente invention est un procédé de préparation d'un stratifié multicouche selon l'invention comprenant les étapes suivantes :
- préparation de la première couche par mélangeage des constituants de la première composition, puis extrusion du mélange obtenu, puis
- préparation de la seconde couche par introduction des ingrédients de la seconde composition dans un solvant, puis agitation sur une secoueuse jusqu'à solubilisation complète pour former une dissolution, puis,
- application de la dissolution sur la première couche,
- séchage à température ambiante.

De manière préférée dans la présente invention, on préférera préparer le stratifié multicouche selon la troisième stratégie ci-dessus énoncée.

Le stratifié multicouche précédemment décrit est un composé solide (à 23°C) et élastique, qui se caractérise notamment, grâce à sa formulation spécifique, par une très haute souplesse et très haute déformabilité.

Selon un mode de réalisation préférentiel de l'invention, ce stratifié multicouche présente un module sécant en extension, à 10 % d'allongement (noté M10), qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

Le stratifié multicouche précédemment décrit est utilisable notamment comme couche étanche aux gaz dans tout type d'objet pneumatique. A titre d'exemples de tels objets pneumatiques, on peut citer les pneumatiques pour véhicules de tout type, les bateaux pneumatiques, les ballons ou balles utilisées pour le jeu ou le sport.

Grâce à sa seconde couche, le stratifié multicouche selon l'invention est susceptible d'adhérer fortement à une composition d'élastomère diénique, comme par exemple une nappe carcasse de pneumatique.

Par conséquent, il est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Ainsi, avantageusement, le polymère diénique compatible avec le deuxième bloc du ou des élastomères thermoplastiques de la seconde composition du stratifié multicouche selon l'invention est l'un des polymères constitutifs de la nappe carcasse de l'objet pneumatique.

Ainsi, un autre objet de la présente invention est un objet pneumatique comportant un stratifié multicouche tel que décrit précédemment.

De manière préférée, le stratifié multicouche est disposé sur la paroi interne de l'objet pneumatique, mais il peut être également intégré complètement à la structure interne de l'objet pneumatique.

L'objet pneumatique selon l'invention est de préférence un bandage pneumatique.

De manière générale, l'objet pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

A titre de poids lourds, on pourra notamment comprendre des métros, des bus et des engins de transport routier tels que camions, tracteurs, remorques et véhicules hors-la-route comme les engins agricoles ou de génie civil.

L'invention concerne également un procédé pour étanchéifier un objet pneumatique vis-à-vis des gaz de gonflage, dans lequel on incorpore audit objet pneumatique lors de sa fabrication, ou on ajoute audit objet pneumatique après sa fabrication, un stratifié multicouche tel que défini précédemment.

De manière préférée dans ce procédé d'étanchéification, le stratifié multicouche est déposé sur la paroi interne de l'objet pneumatique.

Dans une variante particulière de ce procédé, l'objet pneumatique est un bandage pneumatique.

Dans cette variante particulière, au cours d'une première étape, le stratifié multicouche est déposé à plat sur un tambour de confection, avant de recouvrir le stratifié multicouche du reste de la structure du bandage pneumatique.

Enfin, l'invention concerne l'utilisation d'un stratifié multicouche tel que défini ci-dessus comme couche étanche aux gaz de gonflage, de préférence comme couche étanche de pneumatique.

L'invention ainsi que ses avantages seront compris de manière plus approfondie, à la lumière de la figure unique qui schématise, en coupe radiale, un bandage pneumatique conforme à l'invention, ainsi que des exemples de réalisation qui suivent.

La figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est représenté monté sur sa jante 9. L'armature de carcasse 7 est de manière connue en soi constituée d'au moins une nappe renforcée par des câbles dits « radiaux », par exemple textile ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multicouche 10 comportant au moins deux couches (10a et 10b), étanche à l'air grâce à sa première couche 10a disposée du coté de la cavité interne 11, et hautement adhésif au reste de la structure du pneumatique (par exemple son armature de carcasse) grâce à sa seconde couche 10b radialement plus externe. Conformément à un mode de réalisation préférentiel de l'invention, les deux couches (10a et 10b) couvrent substantiellement toute la paroi interne du bandage pneumatique, se prolongeant d'un flanc à l'autre, au moins jusqu'au niveau du crochet de jante lorsque le bandage pneumatique est en position montée.

### Méthodes de mesure

### Test d'adhésion (ou pelage)

Des tests d'adhésion (tests de pelage) ont été conduits pour tester l'aptitude de la couche étanche constituée du stratifié multicouche selon l'invention à adhérer après cuisson à une couche d'élastomère diénique, plus précisément à une composition de caoutchouc usuelle pour armature de carcasse de bandage pneumatique, à base de caoutchouc naturel (peptisé) et de noir de carbone N330 (65 parties en poids pour cent parties de caoutchouc naturel), comportant en outre les additifs usuels (soufre, accélérateur, ZnO, acide stéarique, antioxydant).

Les éprouvettes de pelage (du type pelage à 180°C) ont été réalisées par empilage d'une couche calandrée du stratifié multicouche (1,5 mm) et d'une couche calandrée d'élastomère diénique (1,2 mm). Une amorce de rupture est insérée entre les deux couches calandrées.

L'éprouvette après assemblage a été vulcanisée à 180°C sous pression pendant 10 minutes et le refroidissement a été réalisé sous pression. Des bandes de 30 mm de largeur ont été découpées au massicot. Les deux côtés de l'amorce de rupture ont été ensuite placées dans les mors d'un machine de traction de marque Intron®. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe. Cette mesure a été effectuée aussi bien à température ambiante qu'à 80°C. Les résultats sont exprimés en faciès de pelage (« cohésif » signifie que l'interface adhésive est plus résistante que la cohésion du mélange et est à ce titre préféré au faciès « adhésif »), en valeur de pelage et en indice de performance (une valeur arbitraire de 100 est donnée pour l'adhésion du témoin, un résultat supérieur à 100 indiquant une augmentation de l'adhésion).

### Exemple 1 : stratifié multicouche comprenant une seconde composition à base d'un copolymère styrène/isoprène/styrène

Le matériau élastomère T1 ne comprend qu'une seule couche et sert de référence.

Les deux couches des stratifiés multicouches A1, A2 et A3 sont préparées indépendamment selon le procédé et les tableaux 1 et 2 ci-après.

Les stratifiés multicouches A1, A2 sont des stratifiés multicouches comparatifs et le stratifié multicouche A3 est selon l'invention.

### Première couche

La composition de la première couche des trois stratifiés multicouches A1, A2 et A3 et de l'unique couche du matériau élastomère T1 est identique. Celle-ci est indiquée dans le tableau 1 ci-après.

**Tableau 1**

| **Composant** | **Taux (en pce)** |
|---|---|
| Copolymère à blocs styrène/isobutylène/styrène⁽¹⁾ | 100 pce |
| Polyisobutylène⁽²⁾ | 25 |
| Mica⁽³⁾ | 12 |

| | |
|---|---|
| (1) SIBS Sibstar 102T avec un taux de styrène d'environ 15 %, une Tg d'environ -65°C et une masse moléculaire moyenne en nombre (Mn) d'environ 90 000 g/mol. (2) PIB Indopol H1200. (3) Mica SYA 21R. | |

La première couche a été préparée comme suit. Le mélange des trois constituants (SIBS, polyisobutylène et mica) a été réalisé de manière conventionnelle, à l'aide d'une extrudeuse bi-vis (L/D = 40), à une température typiquement supérieure à la température de fusion de la composition (environ 190°C). L'extrudeuse utilisée comportait une première alimentation pour le SIBS, une deuxième alimentation (trémie) pour le mica et enfin une pompe d'injection liquide sous pression pour l'huile d'extension polyisobutylène ; elle était pourvue d'une filière permettant d'extruder le produit aux dimensions souhaitées.

### Seconde couche

La composition de la seconde couche des stratifiés multicouches A1, A2 et A3 est indiquée dans le tableau 2 ci-après.

**Tableau 2**

| **Composant** | **Taux (en pce)** | | |
|---|---|---|---|
| | **A1 (Comp.)** | **A2 (Comp.)** | **A3 (Inv.)** |
| Copolymère à blocs styrène/isoprène/styrène⁽¹⁾ | 100 | - | - |
| Copolymère à blocs styrène/isoprène/styrène⁽²⁾ | - | 100 | 100 |
| Résine polyphénylène éther⁽³⁾ | - | - | 10 |

| | | | |
|---|---|---|---|
| (1) SIS D1161 avec un taux de styrène d'environ 15 %, une Tg d'environ -60°C et une masse moléculaire moyenne en nombre (Mn) d'environ 200000g/mol. (2) SIS PT1164 avec un taux de styrène d'environ 30 %, une Tg d'environ -60°C et une masse moléculaire moyenne en nombre (Mn) d'environ 200000g/mol. (3) Xyron S203A. | | | |

La deuxième couche a été préparée comme suit. La composition selon le tableau 2 est mélangée dans le toluène et agitée sur une secoueuse pendant au moins 24 heures jusqu'à solubilisation complète pour former une solution à 10 % en poids de la composition selon le tableau 2.

La dissolution ainsi formée est ensuite appliquée sur la première couche formée précédemment. On laisse ensuite sécher la dissolution à température ambiante pendant 15 mn.

Le stratifié multicouche est ainsi formé.

Pour le test de pelage, on prépare des éprouvettes de la manière suivante :
1) mise en contact du stratifié multicouche (pour A1, A2 et A3) ou du matériau élastomère monocouche (pour T1) avec une nappe carcasse classiquement utilisée dans le pneumatique, telle que décrite dans le test d'adhésion,
2) renforcement du stratifié multicouche par application d'un tissu nylon imprégné de SIBS 102T,
3) cuisson de l'assemblage à 180°C pendant 15 mn à 18 bars, puis refroidissement de la presse avec maintien de la pression.

### Résultats

Le niveau d'adhésion est mesuré par un test de pelage à température ambiante et à 80°C. Les résultats sont rassemblés dans le tableau 3 ci-après.

**Tableau 3**

| | **T1 (Comp.)** | **A1 (Comp.)** | **A2 (Comp.)** | **A3 (Inv.)** |
|---|---|---|---|---|
| *à température ambiante* | | | | |
| **Profil de pelage** | adhésif | adhésif | adhésif | cohésif |
| **Force de pelage moyenne (en N/mm)** | 0,6 | 2 | 2,5 | 4 |
| **Indice de performance (base 100)** | 100 | 333 | 417 | 667 |

| *à 80°C* | | | | |
|---|---|---|---|---|
| **Profil de pelage** | adhésif | adhésif | adhésif | cohésif |
| **Force de pelage moyenne (en N/mm)** | 0,1 | 0,1 | 0,3 | 0,5 |
| **Indice de performance (base 100)** | 100 | 100 | 300 | 500 |

Ces résultats montrent que le stratifié multicouche A3 selon l'invention permet d'accroitre significativement la force de pelage, aussi bien à température ambiante qu'à 80°C. De plus, le stratifié multicouche A3 conduit systématiquement à une rupture cohésive.

### Exemple 2 : stratifié multicouche comprenant une seconde composition à base d'un copolymère styrène/butadiène/styrène partiellement hydrogéné.

Les stratifiés multicouches B1, B2 sont des stratifiés multicouches comparatifs et le stratifié multicouche B3 est selon l'invention.

La première couche des stratifiés multicouches B1, B2 et B3 est identique à la première couche des stratifiés multicouches A1, A2 et A3 (cf. tableau 1).

### Seconde couche

La composition de la seconde couche des stratifiés multicouches B1, B2 et B3 est indiquée dans le tableau 4 ci-après.

**Tableau 4**

| **Composant** | **Taux (en pce)** | | |
|---|---|---|---|
| | **B1 (Comp.)** | **B2 (Comp.)** | **B3 (Inv.)** |
| Copolymère à blocs styrène/butadiène/styrène⁽¹⁾ | 100 | - | - |
| Copolymère à blocs styrène/butadiène/styrène partiellement hydrogéné⁽²⁾ | - | 100 | 100 |
| Résine polyphénylène éther⁽³⁾ | - | - | 10 |

| | | | |
|---|---|---|---|
| (1) SOE L606 avec un taux de styrène d'environ 50 %, une Tg d'environ -8°C et une masse moléculaire moyenne en nombre (Mn) d'environ 102000g/mol. (2) SOE S1611 avec un taux de styrène d'environ 62 %, un taux de motifs hydrogénés d'environ 20 % une Tg d'environ +13°C et une masse moléculaire moyenne en nombre (Mn) d'environ 89000 g/mol. (3) Xyron S203A. | | | |

La deuxième couche des stratifiés multicouches B1, B2 et B3 et les stratifiés multicouches B1, B2 et B3 ont été préparés de la même manière que dans l'exemple 1.

### Résultats

Le niveau d'adhésion est mesuré par un test de pelage à température ambiante et à 80°C. Les résultats sont rassemblés dans le tableau 5 ci-après.

**Tableau 5**

| | **T1 (Comp.)** | **B1 (Comp.)** | **B2 (Comp.)** | **B3 (Inv.)** |
|---|---|---|---|---|
| *à température ambiante* | | | | |
| Profil de pelage | adhésif | adhésif | adhésif | cohésif |
| **Force de pelage moyenne (en N/mm)** | 0,6 | 2 | 2 | 4 |
| **Indice de performance (base 100)** | 100 | 333 | 333 | 667 |

| *à 80°C* | | | | |
|---|---|---|---|---|
| **Profil de pelage** | adhésif | adhésif | adhésif | cohésif |
| **Force de pelage moyenne (en N/mm)** | 0,1 | 0,2 | 0,5 | 0,7 |
| **Indice de performance (base 100)** | 100 | 200 | 500 | 700 |

Ces résultats montrent que le stratifié multicouche B3 selon l'invention permet d'accroitre significativement la force de pelage, aussi bien à température ambiante qu'à 80°C. De plus, le stratifié multicouche B3 conduit systématiquement à une rupture cohésive.

## Revendications

1. Stratifié multicouche pour pneumatique comportant au moins deux couches superposées :
- à titre de première couche, une première composition comprenant au moins 50 parties pour cent d'élastomères (pce) d'un ou plusieurs copolymères d'isobutylène et de styrène substitué ou non substitué,
- à titre de seconde couche, une seconde composition comprenant i) au moins 50 pce d'un ou plusieurs élastomères thermoplastiques comprenant au moins un premier bloc compatible avec le ou les copolymères d'isobutylène et de styrène substitué ou non substitué, le mélange du premier bloc compatible avec le ou les copolymères d'isobutylène et de styrène substitué ou non substitué présentant une seule température de transition vitreuse, mesurée selon la norme ASTM D3418, et au moins un deuxième bloc compatible avec un polymère diénique, le mélange du deuxième bloc compatible avec le polymère diénique présentant une seule température de transition vitreuse, mesurée selon la norme ASTM D3418, et ii) un ou plusieurs polymères polyaryléther.

2. Stratifié multicouche selon la revendication 1, **caractérisé en ce que** le ou les copolymères d'isobutylène et de styrène substitué ou non substitué sont choisis parmi les copolymères à blocs d'isobutylène et de styrène substitué ou non substitué, et de préférence parmi un copolymère diblocs styrène/isobutylène, un copolymère triblocs styrène/isobutylène/styrène, et un mélange de ces polymères.

3. Stratifié multicouche selon la revendication 1 ou 2, **caractérisé en ce que** le ou les copolymères d'isobutylène et de styrène substitué ou non substitué ont une teneur en motifs issus d'un monomère styrène substitué ou non substitué variant de 5 à 50 % en poids, de préférence variant de 10 à 40 % en poids, plus préférentiellement variant de 15 à 35 % en poids.

4. Stratifié multicouche selon l'une quelconque des revendications 1 à 3, **caractérisé en ce que** le taux en copolymères d'isobutylène et de styrène substitué ou non substitué de la première composition varie de 70 à 100 pce, plus préférentiellement varie de 80 à 100 pce, et en particulier le ou les copolymères d'isobutylène et de styrène substitué ou non substitué sont les seuls élastomères de la première composition.

5. Stratifié multicouche selon l'une quelconque des revendications 1 à 4, **caractérisé en ce que** la première composition comprend une ou plusieurs charges lamellaires de préférence choisies parmi les graphites, les talcs, les micas, et les mélanges de telles charges.

6. Stratifié multicouche selon la revendication 5, **caractérisé en ce que** le taux en charge lamellaire de la première composition varie de 5 à 15 pce, de préférence varie de 10 à 15 pce.

7. Stratifié multicouche selon l'une quelconque des revendications 1 à 6, **caractérisé en ce que** le ou les élastomères thermoplastiques de la seconde composition sont choisis parmi les élastomères thermoplastiques styréniques, de préférence sont choisis dans le groupe constitué par les copolymères à blocs non hydrogénés ou partiellement hydrogénés, comprenant au moins un bloc styrène, les monomères styrène étant substitués ou non substitués, et au moins un bloc diénique, de préférence le ou les blocs diéniques étant choisis dans le groupe constitué par les polyisoprènes, les polybutadiènes, les copolymères statistiques butadiène-styrène éventuellement hydrogénés et les mélanges de ces polymères, et plus particulièrement le ou les élastomères thermoplastiques de la seconde composition sont choisis dans le groupe constitué par les copolymères à blocs styrène/isoprène/styrène, styrène/copolymère statistique (butadiène-styrène)/styrène partiellement hydrogénés, et les mélanges de ces copolymères.

8. Stratifié multicouche selon l'une quelconque des revendications 1 à 7, **caractérisé en ce que** le ou les élastomères thermoplastiques de la seconde composition ont une teneur en motifs issus d'un monomère styrène substitué ou non substitué variant de 5 à 50 % en poids, de préférence variant de 10 à 40 % en poids, plus préférentiellement variant de 15 à 35 % en poids.

9. Stratifié multicouche selon l'une quelconque des revendications 1 à 8, **caractérisé en ce que** le taux en élastomères thermoplastiques de la seconde composition varie de 60 à 100 pce, de préférence varie de 70 à 100 pce, et plus préférentiellement le ou les élastomères thermoplastiques de la seconde composition sont les seuls élastomères de la seconde composition.

10. Stratifié multicouche selon l'une quelconque des revendications 1 à 9, **caractérisé en ce que** le ou les polymères polyaryléther sont choisis parmi les polymères de polyphénylène éther.

11. Stratifié multicouche selon l'une quelconque des revendications 1 à 10, **caractérisé en ce que** le ou les polymères polyaryléther possèdent une masse moléculaire moyenne en nombre, déterminée par chromatographie d'exclusion stérique, selon la description, variant de 10000 à 45000 g/mol, de préférence de 15000 à 40000 g/mol, et plus préférentiellement de 25000 à 40000 g/mol.

12. Stratifié multicouche selon l'une quelconque des revendications 1 à 11, **caractérisé en ce que** le taux en polymères polyaryléther de la seconde composition varie de 1 à 20 pce, de préférence varie de 5 à 15 pce.

13. Objet pneumatique comportant un stratifié multicouche selon l'une quelconque des revendications 1 à 12.

14. Utilisation d'un stratifié multicouche selon l'une quelconque des revendications 1 à 12 comme couche étanche aux gaz de gonflage, de préférence comme couche étanche de pneumatique.

15. Procédé de préparation d'un stratifié multicouche selon l'une quelconque des revendications 1 à 12 comprenant les étapes suivantes :
- préparation de la première couche par mélangeage des constituants de la première composition, puis extrusion du mélange obtenu, puis
- préparation de la seconde couche par introduction des ingrédients de la seconde composition dans un solvant, puis agitation sur une secoueuse jusqu'à solubilisation complète pour former une dissolution, puis,
- application de la dissolution sur la première couche,
- séchage à température ambiante.

## Patentansprüche

1. Mehrschichtiges Laminat für einen Reifen, umfassend mindestens zwei übereinanderliegende Schichten:
- als erste Schicht eine erste Zusammensetzung, umfassend mindestens 50 Teile pro hundert Gewichtsteile Elastomere (phe) oder ein oder mehrere Copolymere von Isobutylen und substituiertem oder unsubstituiertem Styrol,
- als zweite Schicht eine zweite Zusammensetzung, umfassend i) mindestens 50 phe eines oder mehrerer thermoplastischer Elastomere mit mindestens einem ersten Block, der mit dem oder den Copolymeren von Isobutylen und substituiertem oder unsubstituiertem Styrol kompatibel ist, wobei die Mischung des ersten kompatiblen Blocks mit dem oder den Copolymeren von Isobutylen und substituiertem oder unsubstituiertem Styrol verträglich ist, eine einzige gemäß ASTM-Norm D3418 gemessene Glasübergangstemperatur aufweist, und mindestens einem zweiten Block, der mit einem Dienpolymer kompatibel ist, eine einzige gemäß ASTM-Norm D3418 gemessene Glasübergangstemperatur aufweist, und ii) ein oder mehrere Polyaryletherpolymere.

2. Mehrschichtiges Laminat nach Anspruch 1, **dadurch gekennzeichnet, dass** das oder die Copolymere von Isobutylen und substituiertem oder unsubstituiertem Styrol aus Blockcopolymeren von Isobutylen und substituiertem oder unsubstituiertem Styrol und vorzugsweise aus einem Styrol/Isobutylen-Diblockcopolymer, einem Styrol/Isobutylen/Styrol-Triblockcopolymer und einer Mischung dieser Polymere ausgewählt ist.

3. Mehrschichtiges Laminat nach Anspruch 1 oder 2, **dadurch gekennzeichnet, dass** das oder die Copolymere von Isobutylen und substituiertem oder unsubstituiertem Styrol einen Gehalt an Einheiten, die sich von einem substituierten oder unsubstituierten Styrolmonomer ableiten, im Bereich von 5 bis 50 Gew.-%, vorzugsweise im Bereich von 10 bis 40 Gew.-% und noch weiter bevorzugt im Bereich von 15 bis 35 Gew.-% aufweisen.

4. Mehrschichtiges Laminat nach einem der Ansprüche 1 bis 3, **dadurch gekennzeichnet, dass** der Gehalt an Copolymeren von Isobutylen und substituiertem oder unsubstituiertem Styrol der ersten Zusammensetzung im Bereich von 70 bis 100 phe, weiter bevorzugt im Bereich von 80 bis 100 phe, liegt und es sich bei dem oder den Copolymeren von Isobutylen und substituiertem oder unsubstituiertem Styrol um die einzigen Elastomere der ersten Zusammensetzung handelt.

5. Mehrschichtiges Laminat nach einem der Ansprüche 1 bis 4, **dadurch gekennzeichnet, dass** die erste Zusammensetzung einen oder mehrere plättchenförmige Füllstoffe umfasst, die vorzugsweise aus Graphiten, Talken, Glimmern und Mischungen derartiger Füllstoffe ausgewählt sind.

6. Mehrschichtiges Laminat nach Anspruch 5, **dadurch gekennzeichnet, dass** der Gehalt an plättchenförmigem Füllstoff der ersten Zusammensetzung im Bereich von 5 bis 15 phe und vorzugsweise im Bereich von 10 bis 15 phe variiert.

7. Mehrschichtiges Laminat nach einem der Ansprüche 1 bis 6, **dadurch gekennzeichnet, dass** das oder die Elastomere der zweiten Zusammensetzung aus thermoplastischen Styrolelastomeren ausgewählt sind, vorzugsweise aus der Gruppe bestehend aus nichthydrierten oder teilhydrierten Blockcopolymeren mit mindestens einem Styrolblock, wobei die Styrolmonomere substituiert oder unsubstituiert sind, und mindestens einem Dienblock ausgewählt sind, wobei der oder die Dienblöcke aus der Gruppe bestehend aus Polyisoprenen, Polybutadienen, gegebenenfalls hydrierten statistischen Butadien-Styrol-Copolymeren und Mischungen dieser Polymere ausgewählt sind, und insbesondere das oder die thermoplastischen Elastomere der zweiten Zusammensetzung aus der Gruppe bestehend aus Styrol/Isopren/Styrol-Blockcopolymeren, Styrol/statistisches (Butadien-Styrol)-Copolymer/Styrol-Blockcopolymeren, die teilhydriert sind, und Mischungen dieser Copolymere ausgewählt sind.

8. Mehrschichtiges Laminat nach einem der Ansprüche 1 bis 7, **dadurch gekennzeichnet, dass** das oder die thermoplastischen Elastomere der zweiten Zusammensetzung einen Gehalt an Einheiten, die sich von einem substituierten oder unsubstituierten Styrol Monomer ableiten, im Bereich von 5 bis 50 Gew.-%, vorzugsweise im Bereich von 10 bis 40 Gew.-% und weiter bevorzugt im Bereich von 15 bis 35 Gew.-% aufweisen.

9. Mehrschichtiges Laminat nach einem der Ansprüche 1 bis 8, **dadurch gekennzeichnet, dass** der Gehalt an thermoplastischen Elastomeren der zweiten Zusammensetzung im Bereich von 60 bis 100 phe, vorzugsweise im Bereich von 70 bis 100 phe, liegt und es sich bei dem oder den thermoplastischen Elastomeren der zweiten Zusammensetzung um die einzigen Elastomere der zweiten Zusammensetzung handelt.

10. Mehrschichtiges Laminat nach einem der Ansprüche 1 bis 9, **dadurch gekennzeichnet, dass** das oder die Polyaryletherpolymere aus Polyphenylenetherpolymeren ausgewählt sind.

11. Mehrschichtiges Laminat nach einem der Ansprüche 1 bis 10, **dadurch gekennzeichnet, dass** das oder die Polyaryletherpolymere eine durch Größenausschlusschromatographie gemäß der Beschreibung bestimmte zahlenmittlere Molmasse im Bereich von 10.000 bis 45.000 g/mol, vorzugsweise von 15.000 bis 40.000 g/mol und weiter bevorzugt von 25.000 bis 40.000 g/mol aufweisen.

12. Mehrschichtiges Laminat nach einem der Ansprüche 1 bis 11, **dadurch gekennzeichnet, dass** der Gehalt an Polyaryletherpolymeren der zweiten Zusammensetzung im Bereich von 1 bis 20 phe und vorzugsweise im Bereich von 5 bis 15 phe liegen.

13. Pneumatisches Objekt, umfassend ein mehrschichtiges Laminat nach einem der Ansprüche 1 bis 12.

14. Verwendung eines mehrschichtigen Laminats nach einem der Ansprüche 1 bis 12 als aufpumpgasdichte Schicht, vorzugsweise als dichte Schicht eines Reifens.

15. Verfahren zur Herstellung eines mehrschichtigen Laminats nach einem der Ansprüche 1 bis 12, das die folgenden Schritte umfasst:
- Herstellen der ersten Schicht durch Mischen der Bestandteile der ersten Zusammensetzung und anschließendes Extrudieren der erhaltenen Mischung, dann
- Herstellen der zweiten Schicht durch Eintragen der Bestandteile der zweiten Zusammensetzung in ein Lösungsmittel und anschließendes Bewegen auf einem Schüttler bis zur vollständigen Auflösung zur Bildung einer Lösung, dann
- Aufbringen der Lösung auf die erste Schicht,
- Trocknen bei Umgebungstemperatur.

## Claims

1. Multilayer laminate for a tyre comprising at least two superimposed layers:
- as first layer, a first composition comprising at least 50 phr of one or more copolymers of isobutylene and of substituted or unsubstituted styrene,
- as second layer, a second composition comprising i) at least 50 phr of one or more thermoplastic elastomers comprising at least a first block compatible with the copolymer(s) of isobutylene and of substituted or unsubstituted styrene, the mixture of the first block compatible with the copolymer(s) of isobutylene and of substituted or unsubstituted styrene having a single glass transition temperature (Tg) measured according to standard ASTM D3418, and at least a second block compatible with a diene polymer, the mixture of the second block compatible with a diene polymer having a single glass transition temperature (Tg) measured according to standard ASTM D3418, and ii) one or more polyaryl ether polymers.

2. Multilayer laminate according to Claim 1, **characterized in that** the copolymer(s) of isobutylene and of substituted or unsubstituted styrene are chosen from block copolymers of isobutylene and of substituted or unsubstituted styrene, and preferably from a styrene/isobutylene diblock copolymer, a styrene/isobutylene/styrene triblock copolymer, and a mixture of these polymers.

3. Multilayer laminate according to Claim 1 or 2, **characterized in that** the copolymer(s) of isobutylene and of substituted or unsubstituted styrene have a content of units derived from a substituted or unsubstituted styrene monomer that varies from 5% to 50% by weight, preferably that varies from 10% to 40% by weight, more preferentially that varies from 15% to 35% by weight.

4. Multilayer laminate according to any one of Claims 1 to 3, **characterized in that** the content of copolymers of isobutylene and of substituted or unsubstituted styrene of the first composition varies from 70 to 100 phr, more preferentially varies from 80 to 100 phr, and in particular the copolymer(s) of isobutylene and of substituted or unsubstituted styrene is (are) the only elastomers of the first composition.

5. Multilayer laminate according to any one of Claims 1 to 4, **characterized in that** the first composition comprises one or more platy fillers preferably chosen from graphites, talcs, micas, and mixtures of such fillers.

6. Multilayer laminate according to Claim 5, **characterized in that** the platy filler content of the first composition varies from 5 to 15 phr, and preferably varies from 10 to 15 phr.

7. Multilayer laminate according to any one of Claims 1 to 6, **characterized in that** the thermoplastic elastomer(s) of the second composition is (are) selected from thermoplastic styrene elastomers, preferably selected from the group consisting of non-hydrogenated or partially hydrogenated block copolymers comprising at least one styrene block, the styrene monomers being substituted or unsubstituted, and at least one diene block, preferably the diene block(s) is (are) selected from the group consisting of polyisoprenes, polybutadienes, optionally hydrogenated butadiene-styrene statistical copolymers and the mixtures of these polymers, and more particularly, the thermoplastic elastomer(s) of the second composition is (are) selected from the group consisting of styrene/isoprene/styrene block copolymers and partially hydrogenated styrene/(butadiene-styrene) statistical copolymer/styrene block copolymers, and the mixtures of these copolymers.

8. Multilayer laminate according to any one of Claims 1 to 7, **characterized in that** the thermoplastic elastomer(s) of the second composition has (have) a content of units derived from a substituted or unsubstituted styrene monomer that varies from 5% to 50% by weight, preferably that varies from 10% to 40% by weight, and more preferentially that varies from 15% to 35% by weight.

9. Multilayer laminate according to any one of Claims 1 to 8, **characterized in that** the content of thermoplastic elastomers of the second composition varies from 60 to 100 phr, preferably varies from 70 to 100 phr, and more preferentially the thermoplastic elastomer(s) of the second composition is (are) the only elastomers of the second composition.

10. Multilayer laminate according to any one of Claims 1 to 9, **characterized in that** the polyaryl ether polymer(s) is (are) selected from polyphenylene ether polymers.

11. Multilayer laminate according to any one of Claims 1 to 10, **characterized in that** the polyaryl ether polymer(s) has (have) a number-average molecular weight determined by size exclusion chromatography according to the description, that varies from 10 000 to 45 000 g/mol, preferably from 15 000 to 40 000 g/mol, and more preferentially from 25 000 to 40 000 g/mol.

12. Multilayer laminate according to any one of Claims 1 to 11, **characterized in that** the polyaryl ether polymer content of the second composition varies from 1 to 20 phr, and preferably varies from 5 to 15 phr.

13. Inflatable article comprising a multilayer laminate according to any one of Claims 1 to 12.

14. Use of a multilayer laminate according to any one of Claims 1 to 12 as a layer gastight to inflation gases, preferably as an airtight layer of a tyre.

15. Process for preparing a multilayer laminate according to any one of Claims 1 to 12, comprising the following steps:
- preparing the first layer by mixing the constituents of the first composition, followed by extrusion of the mixture obtained, then
- preparing the second layer by introducing the ingredients of the second composition into a solvent, then agitating on a shaker until completely solubilized in order to form a solution, then,
- applying the solution to the first layer,
- drying at ambient temperature.
